# EUROPEAN PATENT APPLICATION

(11) **EP 4 790 239 A1**
(43) Date of publication of application: **12.08.2026**
(21) Application number: 25180900.0
(22) Date of filing: 04.06.2025
(51) Int. Cl.: F01D 11/08, F01D 11/12, F01D 11/18, F01D 25/24

(54) **ASSEMBLY TO CONTROL A GAP BETWEEN A ROTOR BLADE AND A COMPOSITE CASING IN A TURBINE ENGINE**

(30) Priority: 10.02.2025 PL 45116925; 03.04.2025 US 202519169656
(71) Applicant: General Electric Company, Cincinnati, Ohio 45215 (US); GE Aerospace Poland Sp. z o.o., 02-256 Warsaw (PL)
(72) Inventor: KRAY, Nicholas, Evendale, 45215 (US); SIBBACH, Arthur, Evendale, 45215 (US); KAMINSKI, Robert, 02-256 Warsaw (PL)
(74) Representative: Openshaw & Co.

(57) **Abstract**

An assembly (300) to control a gap between a rotor blade (192) and a casing in a turbine engine (100), the assembly (300) including a casing (301) having an annular casing body (303) and a liner (302) positioned adjacent an inner radial surface of the annular casing body (303), the casing (301) being separated from the rotor blade (192) by the gap in a radial direction. The annular casing body (303) has a lower coefficient of thermal expansion than that of the liner (302) and that of the rotor blade (192). The liner (302) is provided with spring extensions (304) having a specific design and coefficient of thermal expansion to control the gap between the rotor blade (192) and the casing (301).

## Description

### CROSS REFERENCE TO RELATED APPLICATIONS

The present application claims the benefit of Polish Patent Application No. P.451169, filed on February 10, 2025, which is hereby incorporated by reference herein in its entirety.

### TECHNICAL FIELD

The present disclosure relates generally to an assembly to control a gap between a rotor blade and a composite casing in a turbine engine.

### BACKGROUND

Turbine engines used in aircraft generally include rotor blades housed in a casing. The rotor blades are generally made of a metal, such as titanium, while the casing is made of a composite material. The use of a composite material casing instead of a metal casing allows for a reduced weight system. Efficiency of a turbine engine depends, at least in part, on the clearance or the gap between the casing and the rotor blades. If the clearance is excessive, a correspondingly excessive fraction of engine airflow will pass through the gap, rather than interacting with the rotating blades, resulting in reduced engine efficiency. If the clearance is too small, interference can occur between the rotor blades and the casing, resulting in damage to one or more of surfaces of the rotor blade or the casing.

During operation of the turbine engine, the rotor blades tend to thermally expand or to contract, while the casing does not thermally expand or contract, or minimally thermally expands or contracts in a presence of a thermal gradient due to its construction from a composite material. Due to the thermal expansion of the rotor blades, the gap is provided between a tip of the rotor blade and the casing to account for the thermal expansion. By providing a smaller or a tighter gap between the tip of the rotor blade and the casing, a higher performance can be achieved.

### BRIEF DESCRIPTION OF THE DRAWINGS

Features and advantages will be apparent from the following, more particular, description of various exemplary embodiments, as illustrated in the accompanying drawings, wherein like reference numbers generally indicate identical, functionally similar, or structurally similar elements, or both.
FIG. 1 is a schematic, cross-sectional diagram of a turbine engine, taken along a longitudinal centerline axis of the turbine engine, according to an embodiment of the present disclosure.
FIG. 2 is a cross-sectional view of a portion of an inlet duct of the turbine engine shown in FIG. 1, showing detail 2 in FIG. 1, according to an embodiment of the present disclosure.
FIG. 3 is a cross-sectional view of an assembly including a fan casing having an annular casing body, a metallic liner, and a plurality of metallic spring arms, taken along a radial direction of the turbine engine, according to an embodiment of the present disclosure.
FIG. 4A is an axial view of the metallic liner taken at line 4A-4A in FIG. 3, along an axial direction of the turbine engine, according to an embodiment of the present disclosure.
FIG. 4B is an axial view of the metallic liner, along the axial direction of the turbine engine, according to another embodiment of the present disclosure.
FIG. 4C is an axial view of the metallic liner, along the axial direction of the turbine engine, according to yet another embodiment of the present disclosure.
FIG. 5 is a cross-sectional view of the metallic liner taken at line 5-5 in FIG. 3, according to an embodiment of the present disclosure.
FIG. 6 is a cross-sectional view of an assembly including a fan casing having an annular casing body, a metallic liner, and a plurality of spacers, taken along the radial direction of turbine engine, according to an embodiment of the present disclosure.
FIG. 7 is a cross-sectional view of the metallic liner, according to an embodiment of the present disclosure.

### DETAILED DESCRIPTION

Features, advantages, and embodiments of the present disclosure are set forth or apparent from a consideration of the following detailed description, drawings, and claims. Moreover, both the foregoing summary of the present disclosure and the following detailed description are exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "low" and "high," or their respective comparative degrees (e.g., "lower" and "higher," where applicable), when used with the compressor, turbine, shaft, or spool components, each refers to relative pressures or relative speeds, or both within an engine unless otherwise specified. For example, a "low-speed" component defines a component configured to operate at a rotational speed, such as a maximum allowable rotational speed, which is lower than that of a "high-speed" component of the engine. Alternatively, unless otherwise specified, the aforementioned terms may be understood in their superlative degree. For example, a "low-pressure turbine" may refer to the lowest maximum pressure within a turbine section, and a "high-pressure turbine" may refer to the highest maximum pressure within the turbine section. The terms "low" or "high" in such aforementioned regards may additionally, or alternatively, be understood as relative to minimum allowable speeds or pressures, or minimum or maximum allowable speeds or pressures relative to normal, desired, steady state, etc., operation of the engine, or any combination thereof.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the term "axial" refers to directions and orientations that extend substantially parallel to a longitudinal centerline of the turbine engine. Moreover, the terms "radial" and "radially" refer to directions and orientations that extend substantially perpendicular to the longitudinal centerline of the turbine engine. In addition, as used herein, the term "circumferentially" refers to directions and orientations that extend arcuately about the longitudinal centerline of the turbine engine.

The term "composite material," as used herein, is indicative of a component material having two or more constituent materials. A composite material can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC), carbon fibers, a polymeric resin, a thermoplastic resin, bismaleimide (BMI) materials, polyimide materials, an epoxy resin, glass fibers, and silicon matrix materials. The composite may be formed of a matrix material and a reinforcing element, such as a fiber (referred to herein as a reinforcing fiber).

As used herein, "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle. The polymeric matrix material may include, for example, thermoset resin, bismaleimide (BMI) materials, polyimide materials, or thermoplastic resin.

The composite material may be used to form a composite component (e.g., a composite airfoil). As used herein, a "composite component" refers to a structure or a component including any suitable composite material. Composite components, such as a composite airfoil (e.g., a composite fan blade), can include several layers or plies of composite material (composite plies). The layers or plies can vary in stiffness, material, and dimension to achieve the desired composite component or composite portion of a component having a predetermined weight, size, stiffness, and strength. One or more layers of adhesive can be used in forming or coupling composite components. Adhesives can include resin and phenolics, wherein the adhesive can require curing at elevated temperatures or other hardening techniques.

As may be used herein, PMC refers to a class of materials. The PMC material may be a prepreg. A prepreg is a reinforcement material (e.g., a reinforcing fiber) preimpregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermoset resin polymers or thermoplastic resin polymers. Thermoplastic resin polymers are generally categorized as polymers that can be repeatedly softened and flowed when heated, and hardened, when sufficiently cooled due to physical rather than chemical changes. Notable example classes of thermoplastic resin polymers include nylons, thermoplastic polyesters, polyaryletherketones, and polycarbonate resins. A specific example of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead, thermally decompose when sufficiently heated. Notable examples of thermoset resin polymers include epoxy, bismaleimide (BMI), and polyimide resins.

Instead of using a prepreg with thermoplastic polymers, another non-limiting example utilizes a woven fabric. A woven fabric can include, but is not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin are then cured and removed from the mold. When removed from the mold, the composite component can require post-curing processing. RTM may be a vacuum assisted process. That is, the air from the cavity or the mold can be removed and replaced by the resin prior to heating or curing. The placement of the dry fibers can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) or coated prior to inclusion within the matrix, or both. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with the silicon carbide. A CMC material as used herein may be formed using any known or hereafter developed methods including, but not limited to, melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or an alloy can be a combination of at least two or more elements or materials, where at least one is a metal.

As used herein, an alloy is "based" on a particular element when that element is present in the alloy at the greatest weight percent, by total weight of the alloy, of all elements contained in the alloy. For example, an iron-based alloy has a higher weight percentage of iron than any other single element present in the alloy.

As noted above, certain components of gas turbine engines, particularly, those used in aircraft, can be made from composite materials. Such components can include, for example, various housing and casing structures. For example, a rotating airfoil assembly, such as a fan or a compressor rotor, includes rotating blades and may have a casing circumscribing the rotating blades. A casing comprising a composite material provides significant weight savings for use in a turbine engine for an aircraft. The composite material includes reinforcing fiber tows, such as reinforcing fiber tows formed from carbon fibers. The carbon fiber has a very low coefficient of thermal expansion (CTE), e.g., nearly zero for many engineering applications, and, as a result, composite casings made from composite materials with carbon fibers typically expand very little during engine operation. When the casing is used for a rotor blade with blades that are also composite materials, the blades and the casing expand similarly during changes in operating conditions. When the casing is used for a rotor blade with a metallic material, however, a larger radial clearance between the rotor blade and the composite casing is maintained to prevent the rotor blade rubbing into the casing during engine operation, as the rotor blade (metallic rotor blade) expands more than does the casing. This larger radial clearance will reduce engine performance and fuel efficiency. Efficiency of a turbine engine depends, at least in part, on the clearance or the gap between the casing and the rotor blades. If the clearance is excessive, a correspondingly excessive fraction of engine flow will pass through the gap rather than interacting with the rotating blades, resulting in reduced engine efficiency. If the clearance is too small, interference can occur between the rotor blades and the casing, resulting in damage to one or more of surfaces of the rotor blade or the casing.

The present disclosure provides an assembly to control the gap between the rotor blades and the casing, the casing having a lower CTE than that of the rotor blades. The rotor blades are generally made of a metal, such as titanium, while the casing is generally made of a composite material. The use of a composite casing instead of a metal casing allows for a reduced weight system. The rotor blades tend to thermally expand in a presence of a thermal gradient. Whereas, the casing does not thermally expand, or only minimally thermally expands, in the presence of the thermal gradient. Due to the thermal expansion of the rotor blades, the gap between a tip of the blade and the casing is controlled to account for the thermal expansion.

A better match CTE system is desired so that the casing and the rotor blade expand in similar amounts to maintain a tighter or a smaller gap. In an embodiment, a metallic liner is provided against the composite casing to account for thermal expansion. The use of the metallic liner provides the ability to substantially match the thermal expansion of the rotor blades. As a result, a tighter gap can be maintained between the tip of the rotor blade and the casing.

The metallic liner is mainly used as an airflow path surface. In an embodiment, the metallic liner can be a passive system relying on airflow generated by the movement of blades. In another embodiment, the metallic liner can be additionally driven by bleed flows to fill the cavity between the metallic liner and the inner diameter surface of the composite casing. For example, bleed airflow from the compressor discharge being at relatively higher temperature can be circulated around the metallic liner to warm and expand the metallic liner that is at a cooler temperature than the warmer bleed airflow. As a result, the temperature of the warmer bleed airflow is simultaneously decreased due to contact with the cooler metallic liner. The cooler bleed airflow can then subsequently be used to provide cooling to one or more components in the turbine of the engine, which are exposed to much higher temperature combustion gases.

In an embodiment, the metallic liner is spring loaded to an inner radial surface of the casing to enable concentric centering of the metallic liner to the blades. In an embodiment, the metallic liner is located radially over the tips of the rotor blades. In an embodiment, spring arms can be provided that may be integral to or separate from the metallic liner. The spring arms may be segmented and spaced apart around the circumference of the casing, three hundred and sixty degrees around the longitudinal centerline axis of the turbine engine. The metallic liner may include an optional layer of abradable material. The metallic liner may have a substantially constant thickness, tapered, or may include stiffening backside ribs or arms. In an embodiment, the metallic liner may include optional bleed airflow openings to feed an airflow to a cavity between the metallic liner and the inner radial surface of the casing. In an embodiment, a spacer material (e.g., a negative CTE material) can be provided between the metallic liner and the casing. When a positive thermal gradient is applied, the metallic liner expands, while the negative CTE material spacer contracts to maintain a gap between the tip of the rotor blade and the metallic liner substantially constant and relatively small. The rotor blade also expands due to (i) centrifugal forces generated by the high rotation speed of the rotor blade, and (ii) the relatively higher temperature of the airflow flowing around the rotor blade.

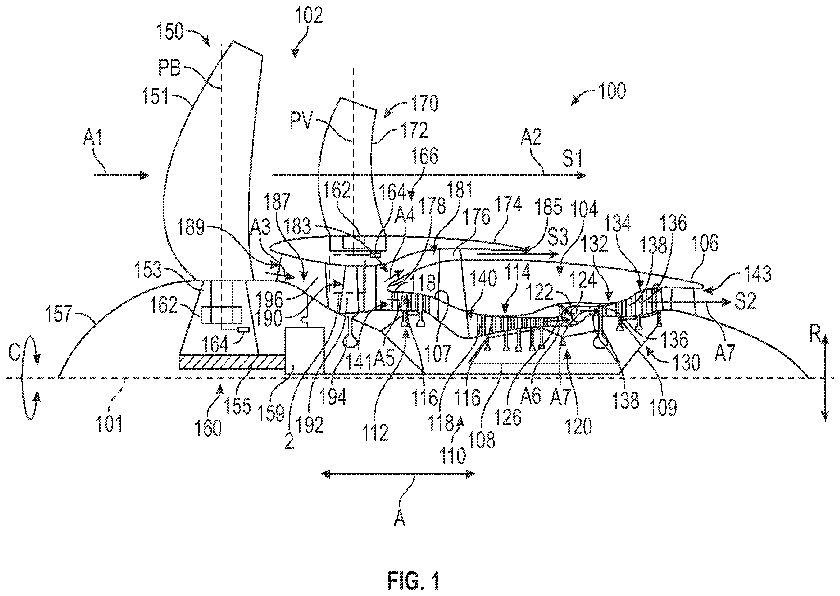

Referring now to the drawings, FIG. 1 is a schematic, cross-sectional view of a turbine engine 100 that can be used on an aircraft, according to an embodiment of the present disclosure. The turbine engine 100 has an axial direction A (extending parallel to a longitudinal centerline (axis) 101, shown for reference in FIG. 1), a radial direction R, and a circumferential direction C. The circumferential direction C extends in a direction rotating about the longitudinal centerline (axis) 101 (the axial direction A). In the embodiment depicted in FIG. 1, the turbine engine 100 is an unducted fan engine or an open fan engine. The turbine engine 100 is a "three-stream engine" having three distinct streams (labeled S1, S2, and S3 in FIG. 1) of thrust-producing airflow during operation, as detailed further below. The turbine engine 100 includes a fan section 102 and a turbo-engine 104 disposed downstream from the fan section 102.

The turbo-engine 104 depicted in FIG. 1 includes, in serial flow relationship, a compressor section 110, a combustion section 120, and a turbine section 130. The turbo-engine 104 is substantially enclosed within a core cowl 106 that is substantially tubular and annularly surrounds the turbo-engine 104. The core cowl 106 defines a core inlet 141 and, in this embodiment, the core inlet 141 is annular. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130, together, define, at least in part, a core air flow path, also referred to as a core duct 140, extending from the core inlet 141 to a core air exhaust nozzle 143, and, through which, core air A5 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotate relative to a corresponding plurality of static compressor vanes 118 (also called nozzles) to compress or to pressurize the core air A5 passing through the stage. In a single compressor stage, the plurality of compressor blades 116 can be provided in a ring, extending radially outwardly relative to the longitudinal centerline (axis) 101 from a blade platform to a blade tip (e.g., extend along the radial direction R). The compressor blades 116 can be a part of a compressor rotor that includes a disk, with compressor blades 116 extending radially from the disk. Other configurations of the compressor rotor can be used, including, for example, blisks where the disk and the compressor blades 116 are integrally formed with each other to be a single piece. The corresponding static compressor vanes 118 are positioned upstream of and adjacent to the rotating compressor blades 116. The compressor vanes 118 for a stage of the compressor can be mounted to a core casing 107 in a circumferential arrangement. The core casing 107 may define, at least in part, the core air flow path (the core duct 140). Each compressor stage can be used to sequentially compress the core air A5 flowing through the core air flow path (the core duct 140), generating compressed air A6. Any suitable number of compressor blades 116, compressor vanes 118, and compressor stages can be used.

Each of the HP turbine 132 and the LP turbine 134 also may include a plurality of turbine stages. In each stage, a plurality of turbine blades 136 rotates relative to a corresponding plurality of static turbine vanes 138 (also called a nozzle) to extract energy from combustion gases A7 passing through the stage. The turbine blades 136 can be a part of a turbine rotor. Any suitable configuration for a turbine rotor can be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air A6 from the compressor section 110 to form a fuel and air mixture, and combusted, generating combustion products (i.e., combustion gases A7). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases A7 are discharged from the combustion chamber 124. These combustion gases can be directed into the turbine blades 136 of the HP turbine 132 and, then, the turbine blades 136 of the LP turbine 134 and the combustion gases A7 drive (rotate) the turbine blades 136 of the HP turbine 132 and the LP turbine 134. Any suitable number of turbine blades 136, turbine vanes 138, and turbine stages can be used. After flowing through the turbine section 130, the combustion gases A7 are exhausted from the turbine engine 100 through the core air exhaust nozzle 143 to provide propulsive thrust.

The turbine engine 100 and, more specifically, the turbo-engine 104, further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases A7 are routed into the HP turbine 132 and expanded through the HP turbine 132 where a portion of thermal energy or kinetic energy from the combustion gases A7 is extracted via the one or more stages of the turbine blades 136 and turbine vanes 138 of the HP turbine 132. This causes the HP shaft 108 to rotate, which supports operation of the HP compressor 114 (self-sustaining cycle) and rotation of the compressor rotors and, thus, the compressor blades 116 of the HP compressor 114 via the HP shaft 108. In this way, the combustion gases A7 do work on the HP turbine 132. The combustion gases A7 are then routed into the LP turbine 134 and expanded through the LP turbine 134. Here, a second portion of the thermal energy or the kinetic energy is extracted from the combustion gases A7 via one or more stages of the turbine blades 136 and the turbine vanes 138 of the LP turbine 134. This causes the LP shaft 109 to rotate, which supports operation of the LP compressor 112 (self-sustaining cycle), and rotation of the compressor rotors and, thus, the compressor blades 116 of the LP compressor 112 via the LP shaft 109. In this way, the combustion gases A7 do work on the LP turbine 134. The HP shaft 108 and the LP shaft 109 are disposed coaxially about the longitudinal centerline (axis) 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline (axis) 101 and, as discussed above, coupled to rotatable elements such as the compressor rotors and the turbine rotors.

The fan section 102 shown in FIG. 1 includes a fan, which is referred to herein as a primary fan 150. In the depicted embodiment, the primary fan 150 is an open rotor fan, also referred to as an unducted fan. The primary fan 150 has a plurality of primary fan blades 151 coupled to a fan disk 153. As depicted in FIG. 1, the primary fan blades 151 extend outwardly from the fan disk 153 generally along the radial direction R. One primary fan blade 151 is depicted in FIG. 1, but the plurality of primary fan blades 151 can be arranged in equal spacing around the longitudinal centerline (axis) 101. The primary fan blades 151 and the fan disk 153 are rotatable, together, about the longitudinal centerline (axis) 101 by a fan shaft 155. The fan disk 153 is covered by a fan hub 157 that is aerodynamically contoured to promote an airflow through the plurality of primary fan blades 151. In this embodiment, the fan hub 157 is rotatable together with the primary fan blades 151 and the fan disk 153.

As shown in FIG. 1, the fan shaft 155 is coupled with the LP shaft 109 via a speed reduction gearbox or a power gearbox, also referred to as a gearbox assembly 159. The LP shaft 109 is thus driving coupled to the primary fan. The gearbox assembly 159 is shown schematically in FIG. 1. The gearbox assembly 159 includes a plurality of gears for adjusting the rotational speed of the fan shaft 155 and, thus, the rotational speed of the primary fan 150 relative to the rotational speed of the LP shaft 109. The gearbox assembly 159 can be used to reduce the rotational speed to a speed that is more efficient for the primary fan 150. The gearbox assembly 159 may have a gear ratio of 4:1 to 14:1, or 7:1 to 12:1, or 4:1 to 10:1, or 5:1 to 9:1, or 6:1 to 9:1, and can be configured in an epicyclic star configuration or a planet gear configuration. The gearbox assembly can have a gear ratio of 4:1 to 14:1 for the unducted fan engine (e.g., the turbine engine 100). The gearbox can be a single stage gearbox or a compound gearbox (e.g., having a plurality of stages).

In the case of a variable pitch fan, as depicted in FIG. 1, for example, the plurality of primary fan blades 151 is rotatable relative to the fan disk 153 about a fan blade pitch axis PB. Each of the primary fan blades 151 can be connected to the fan disk 153 by a pitch bearing 162 that allows for rotation of the primary fan blades 151 about the pitch axis PB. The primary fan blades 151 are rotatable within the pitch bearing 162 by a pitch actuator 164 operatively coupled to the primary fan blades 151 to vary the pitch of a corresponding primary fan blades 151. One or more pitch actuators 164 can be used, and, in some embodiments, the pitch actuators 164 rotate the primary fan blades 151 in unison. A fan actuation system 160 controls the one or more pitch actuators 164 to change the pitch of the primary fan blades 151 about their respective pitch axis PB. The fan actuation system 160 can be disposed within the fan hub 157.

The fan section 102 includes a plurality of fan guide vanes 172 (only one shown in FIG. 1). The fan guide vanes 172 are circumferentially spaced and disposed around the longitudinal centerline (axis) 101 as part of a fan guide vane array 170. In the embodiment depicted in FIG. 1, the fan guide vanes 172 are static airfoils and are not rotatable about the longitudinal centerline (axis) 101. Each fan guide vane 172 is mounted to a fan cowl 174 and extends outwardly from the fan cowl 174 generally along the radial direction R. In the case of a variable pitch fan, as depicted in FIG. 1, for example, the plurality of fan guide vanes 172 is rotatable relative to the fan cowl 174 about a fan guide vane pitch axis PV. A fan guide vane actuation system 166 can be used to change the pitch of the fan guide vanes 172. The fan guide vane actuation system 166 can operate similarly to the fan actuation system 160, discussed above, and that discussion applies here. The same reference numerals are thus used for the pitch bearings 162 and the pitch actuators 164 of the fan guide vane actuation system 166.

The fan cowl 174 annularly encases at least a portion of the core cowl 106 and is generally positioned outward of the core cowl 106 along the radial direction R. Together, the fan cowl 174 and the core cowl 106 define an outer casing of the turbine engine 100. A downstream section of the fan cowl 174 extends over a forward portion of the core cowl 106 to define a fan flow path, also referred to as a fan duct 181. Incoming air enters through the fan duct 181 through a fan duct inlet 183 and exits through a fan exhaust nozzle 185 to produce propulsive thrust. The fan duct 181 is an annular duct positioned generally outward of the core duct 140 along the radial direction R. The fan cowl 174 and the core cowl 106 are connected together and supported by a plurality of struts 176 (only one shown in FIG. 1). The struts 176 are circumferentially spaced about longitudinal centerline (axis) 101 and extend radially outward from the core cowl 106. Each strut of the plurality of struts 176 is aerodynamically contoured to direct air flowing thereby.

The turbine engine 100 includes an inlet duct 187. The inlet duct 187 extends between an engine inlet 189 and the core inlet 141, and the fan duct inlet 183. The engine inlet 189 is defined generally at the forward end of the fan cowl 174 and is positioned between the primary fan 150 and the fan guide vanes 172 along the axial direction A. The inlet duct 187 is an annular duct that is positioned inward of the fan cowl 174 along the radial direction R. Air flowing downstream along the inlet duct 187 is split, not necessarily evenly, into the core duct 140 and the fan duct 181 by a splitter 178 of the core cowl 106. The inlet duct 187 is wider than the core duct 140 along the radial direction R. The inlet duct 187 is also wider than the fan duct 181 along the radial direction R.

The fan section 102 also includes a mid-fan 190. The mid-fan 190 includes a plurality of mid-fan blades 192 (only one is shown in FIG. 1). The plurality of mid-fan blades 192 are rotatable about the longitudinal centerline axis 101. In the depicted embodiment, the mid-fan 190 is drivingly coupled with the LP turbine 134 via the LP shaft 109. The plurality of mid-fan blades 192 can be arranged in an equal circumferential spacing about the longitudinal centerline axis 101. The mid-fan blade 192 can be a part of a rotor that includes a central hub, such as a disk 194, and each mid-fan blade 192 of the plurality of mid-fan blades 192 extends radially from the disk 194. Other configurations of the compressor rotor can be used, including, for example, blisks where the disk 194 and the mid-fan blades 192 are integrally formed with each other to be a single piece.

The plurality of mid-fan blades 192 are annularly surrounded (e.g., ducted) by the fan cowl 174. In this regard, the mid-fan 190 is positioned inward of the fan cowl 174 along the radial direction R. The mid-fan 190 is positioned within the inlet duct 187 upstream of both the core duct 140 and the fan duct 181. A ratio of a span of primary fan blades 151 to that of a mid-fan blade 192 (a span is measured from a root to a tip of the respective blade) can be selected as needed. A plurality of inlet mid-fan vanes 196 is positioned upstream of and adjacent to the rotating mid-fan blade 192. The inlet mid-fan vanes 196 can be mounted to the fan cowl 174 in a circumferential arrangement.

During operation of the turbine engine 100, an initial airflow or incoming air A1 passes through the primary fan blades 151 of the primary fan 150 and splits into a first airflow (a first portion of air, which is referred to herein as primary bypass air A2) and a second airflow (a second portion of air, which is referred to herein as engine air A3). The primary bypass air A2 bypasses the engine inlet 189 and flows generally along the axial direction A outward of the fan cowl 174 along the radial direction R. The primary bypass air A2 is accelerated by the primary fan blades 151 and passes through the fan guide vanes 172. The primary bypass air A2 then continues downstream to produce a primary propulsion stream or a first thrust stream S1. A majority of the net thrust produced by the turbine engine 100 is produced by the first thrust stream S1.

The engine air A3 is directed or routed into the inlet duct 187 and enters the inlet duct 187 through the engine inlet 189. The engine air A3 flowing downstream through the inlet duct 187 flows through the mid-fan blades 192 of the mid-fan 190 and is compressed by the rotating mid-fan blade 192. After flowing through the mid-fan blade 192, the engine air A3 is split by the splitter 178 into a third airflow (a third portion of air, which is referred to herein as secondary bypass air A4) and a fourth airflow (a fourth portion of air, which is referred to herein as core air A5). The core air A5 is directed or is routed into an upstream section of the core duct 140, or, more specifically, into the core inlet 141. The core air A5 flows through the core duct 140 (as discussed above) to generate combustion gases A7 and exits the core duct 140 through the core air exhaust nozzle 143 to produce a core air stream, also referred to as a second thrust stream S2.

The secondary bypass air A4 is directed or routed into the fan duct 181 and enters the fan duct 181 through the fan duct inlet 183. The secondary bypass air A4 flows generally along the axial direction A through the fan duct 181 and is exhausted from the fan duct 181 through the fan duct inlet 183 to produce a third stream, also referred to as a third thrust stream S3. The third thrust stream S3 is a secondary air stream that increases fluid energy to produce a minority of total propulsion system thrust. In some embodiments, a pressure ratio of the third stream is higher than that of the primary propulsion stream (e.g., a bypass or a propeller driven propulsion stream). The thrust can be produced through a dedicated nozzle or through mixing of the secondary air stream with the primary propulsion stream or a core air stream, e.g., into a common nozzle. In certain embodiments, an operating temperature of the secondary air stream is less than a maximum compressor discharge temperature for the engine. Furthermore, in certain embodiments, aspects of the third stream (e.g., airstream properties, mixing properties, or exhaust properties), and, thereby, a percent contribution to total thrust, are passively adjusted during engine operation or can be modified purposefully through the use of engine control features (such as fuel flow, electric machine power, variable stators, variable inlet guide vanes, valves, variable exhaust geometry, or fluidic features) to adjust or to improve overall system performance across a broad range of potential operating conditions.

The turbine engine 100 shown in FIG. 1 and discussed herein (e.g., an unducted fan engine) is provided by way of example only. In other embodiments, any other suitable engine can be utilized with aspects of the present disclosure. For example, in other embodiments, the engine can be any other suitable gas turbine engine, such as a high bypass turbofan engine, a turboshaft engine, a turboprop engine, a turbojet engine, and the like. In such a manner, in other embodiments, the gas turbine engine may have other suitable configurations, such as other suitable numbers or arrangements of shafts, compressors, turbines, fans, etc. Further, although the turbine engine 100 is shown as a geared, variable pitch turbofan engine, in other embodiments, the turbine engine 100 can be a direct drive turbine engine or can be a fixed-pitch turbine engine. In other embodiments, the primary fan 150 and the fan guide vane array 170 can be ducted or shrouded, including a nacelle or a shroud that circumferentially surrounds one or both of the primary fan 150 and the fan guide vane array 170, either collectively or individually. Further, still, in alternative embodiments, aspects of the present disclosure can be incorporated into, or otherwise utilized with, any other type of engine, such as reciprocating engines.

The turbine engine 100 discussed herein is suitable for use on aircraft. Suitable aircraft include, for example, airplanes and unmanned aerial vehicles (UAV). In other embodiments, the turbine engine can be any other turbine engine, such as an industrial turbine engine incorporated into a power generation system, or a nautical turbine engine on a ship or other vessel.

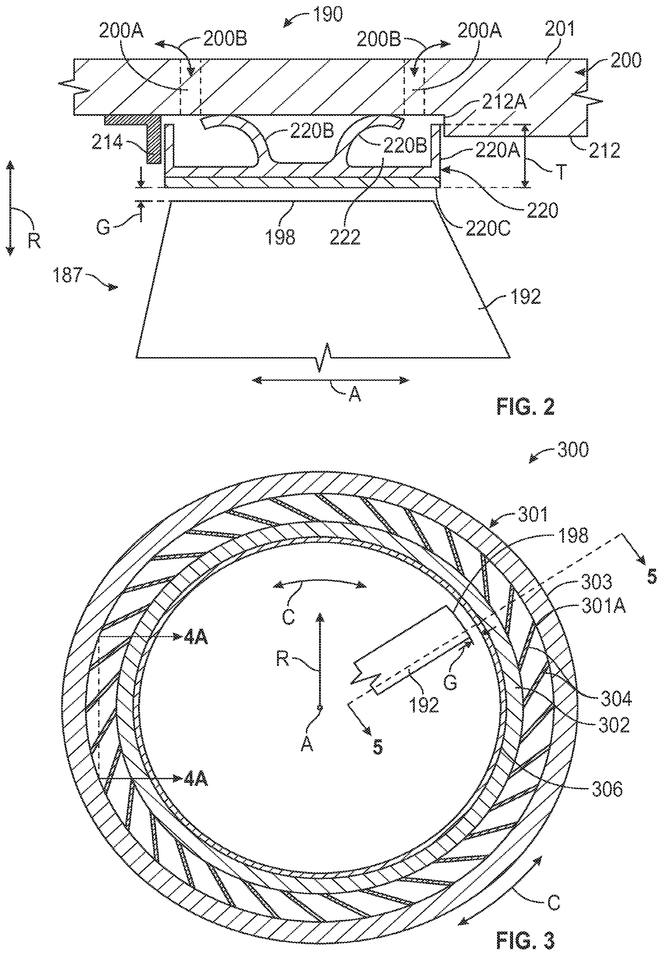

FIG. 2 is a cross-sectional view of a portion of the inlet duct 187, including the mid-fan 190, showing detail 2 in FIG. 1, according to an embodiment of the present disclosure. In the following paragraphs, the inlet duct 187, including the mid-fan 190 having the mid-fan blades 192 (rotor blades), is only used as an example to illustrate various features of the present disclosure. The application of the present disclosure is not limited to the inlet duct 187 including the mid-fan 190 having the mid-fan blades 192, but can be applied to any area of the turbine engine 100 where a rotor blade and a casing are used. As noted above, the fan cowl 174 (shown in FIG. 1) defines, in part, the inlet duct 187 and circumferentially surrounds the mid-fan blades 192 (only one blade is shown in FIG. 2). More specifically, the fan cowl 174 can include one or more casings or casing segments, to define the inlet duct 187. In the depicted embodiment, a fan casing 200 is positioned radially outward of the mid-fan blades 192 of the mid-fan 190. The fan casing 200 is at a radial position to circumscribe the mid-fan blades 192 in surrounding relationship therewith. Each of the mid-fan blades 192 includes a tip 198. In an embodiment the fan casing 200 is made of a composite material.

In an embodiment, the fan casing 200 includes an annular casing body 201 and a metallic liner 220 positioned adjacent an inner radial surface 212 of the annular casing body 201 of the fan casing 200. In an embodiment, the metallic liner 220 is provided between the tip 198 of the mid-fan blades 192 and the inner radial surface 212 of the annular casing body 201 of the fan casing 200. The metallic liner 220 can be separable from the annular casing body 201 of fan casing 200. The tip 198 of the mid-fan blades 192 is spaced apart from the metallic liner 220 of the casing 200 by a gap G along the radial direction R. As the annular casing body 201 of the fan casing 200 is made from a composite material, the annular casing body 201 of the fan casing 200 does not have a same thermal expansion or contraction as that of the metallic material of the mid-fan blades 192. Initially, a gap G is provided between the mid-fan blades 192 and the annular casing body 201 of the fan casing 200 with an initial dimension D. However, due to the difference in the thermal expansion or contraction between the mid-fan blades 192 and the annular casing body 201, the dimension D of the gap G may increase. Efficiency of a turbine engine depends, at least in part, on the clearance or the gap G between the fan casing 200 and the mid-fan blades 192. If the dimension of the gap G is excessive, a correspondingly excessive fraction of engine airflow will pass through the gap, rather than interacting with the rotating mid-fan blades 192, resulting in reduced engine efficiency. If the clearance is too small, interference can occur between the mid-fan blades 192 and the fan casing 200, resulting in damage to one or more of surfaces of the mid-fan blades 192 or the fan casing 200. As a result, the metallic liner 220 is employed to substantially match the thermal expansion or contraction of the mid-fan blades 192 so as to maintain a smaller gap G with a tighter clearance between the mid-fan blades 192 and the fan casing 200 so as to not reduce engine efficiency or damage one or more surfaces of the mid-fan blades 192 or the fan casing 200.

The annular casing body 201 has a lower coefficient of thermal expansion (CTE) than that of the metallic liner 220 and that of the mid-fan blades 192. The metallic liner 220 is provided to control the gap between the metallic liner 220 and the tip 198 of the mid-fan blades 192. In an embodiment, the metallic liner 220 can be made from the same metallic material (e.g., titanium or an alloy of titanium) as the mid-fan blades 192. In an embodiment, the metallic liner 220 includes a frame 220A and a plurality of spring arms 220B extending from the frame 220A. In an embodiment, as shown in FIG. 2, the spring arms 220B are integrally formed from the same material as the frame 220A. In another embodiment, the spring arms 220B can be made separate from the frame 220A (for example, coupled to the frame 220A). In an embodiment, the plurality of spring arms 220B can be segmented and spaced apart around a circumferential direction C of the fan casing 200. In another embodiment, the plurality of spring arms 220B can extend the full circumference of the fan casing 200, three hundred and sixty degrees, along the circumferential direction C, around the longitudinal centerline axis 101 of the turbine engine 100 (shown in FIG. 1). In an embodiment, the metallic liner 220 may have a substantially constant thickness T along the axial direction A (as shown in FIG. 2). In another embodiment, the metallic liner 220 can also have a tapered thickness T that follows a profile of the tip 198 of the mid-fan blades 192.

In an embodiment, as shown in FIG. 2, one or more bleed airflow openings 200A can be provided in the annular casing body 201 of the fan casing 200 to feed a cavity 222 defined by the frame 220A of the metallic liner 220 and the inner radial surface 212 of the annular casing body 201 of the fan casing 200 with airflow 200B. For example, airflow 200B from the compressor discharge being at relatively higher temperature can be circulated within the cavity 222 defined by the frame 220A of the metallic liner 220 to warm and expand the metallic liner 220 that is at a cooler temperature than the warmer airflow 200B. As a result, the temperature of the warmer airflow 200B fed through the one or more bleed airflow openings 200A is simultaneously decreased due to contact with the cooler metallic liner 220. The cooler airflow exiting through the one or more bleed airflow openings 200A can then subsequently be used to provide cooling airflow to one or more components in the turbine engine 10 (shown in FIG. 1), which are exposed to much higher temperature combustion gasses. The cooling airflow can be provided either internally to the one or more components or through holes in the one or more components. For example, the cooling airflow can provide a cooling layer of air between the one or more components and combustion gases.

The metallic liner 220 may also include an abradable surface 220C. The abradable surface 220C of the metallic liner 220 is configured to be abraded by the tip 198 of the mid-fan blade 192 when the tip 198 of the mid-fan blade 192 meets the abradable surface 220C of the metallic liner. In an embodiment, the abradable surface 220C can be a layer of abradable material (e.g., ceramic material) deposited on the frame 220A of the metallic liner 220.

In an embodiment, the metallic liner 220 can be abutted against the inner radial surface 212 of the annular casing body 201 of the fan casing 200 such that the plurality of spring arms 220B of the metallic liner 220 abut the inner radial surface 212 of the annular casing body 201. The frame 220A of the metallic liner 220 can have a U-shape, as shown in FIG. 2. However, the frame 220A of the metallic liner 220 can also have other shapes such as a trapezoid shape. As shown in FIG. 2, the frame 220A of the metallic liner 220 is secured in position on one end along the axial direction A by a notch or a lip 212A of the inner radial surface 212 and is secured in position on an opposite end along the axial direction A by an axial retention member 214.

In operation, when a thermal gradient is present, for example, during operation of the turbine engine 100, the plurality of spring arms 220B can expand under a positive thermal gradient (i.e., increase in temperature) or retract under a negative thermal gradient (i.e., decrease in temperature). As a result, the plurality of spring arms 220B will apply a force against the inner radial surface 212 of the annular casing body 201 of the fan casing 200 or retract from the inner radial surface, which, in turn, maintains the gap G between the fan casing 200 and the tip 198 of the mid-fan blade 192 within a desired tight clearance.

In an embodiment, the metallic liner 220 can be used as an airflow path surface. For example, an engine air flowpath passes between the mid-fan blades 192 (shown in FIG. 1). The tips 198 of the mid-fan blades 192, rotate in close proximity to the abradable surface 220C (inner surface) of the metallic liner 220. The abradable surface 220C of the metallic liner 220 also corresponds to an outer surface of the flowpath of the turbine engine 10 (shown in FIG. 1) through the mid-fan 190 of the turbine engine 10 (shown in FIG. 1). In an embodiment, the metallic liner 220 can be a passive system relying on airflow generated by the movement of blades 192. In another embodiment, the metallic liner 220 additionally can be driven by the airflow 200B that flows through bleed airflow openings 200A to fill the cavity 222 between the metallic liner 220 and the inner radial surface 212 of the annular casing body 201 of the fan casing 200.

FIG. 3 is a cross-sectional view, taken along the radial direction R, of an assembly 300, including a fan casing 301 having an annular casing body 303, a metallic liner 302, and a plurality of metallic spring extensions 304, according to an embodiment of the present disclosure. The assembly 300 can be, for example, used in the inlet duct 187 (shown in FIG. 1). In the depicted embodiment, the assembly 300, including the fan casing 301, is positioned radially outward of the mid-fan blades 192 (only one is shown in FIG. 3). The metallic liner 302 is radially spaced apart from the annular casing body 303 of the fan casing 301. The plurality of metallic spring extensions 304 are disposed between the annular casing body 303 and the metallic liner 302. In an embodiment, the annular casing body 303 can be made from a composite material. In an embodiment, the plurality of metallic spring extensions 304 are coupled to metallic liner 302. In another embodiment, the plurality of metallic spring extensions 304 can be integrally formed with the metallic liner 302 and can be made from the same metal (e.g., titanium or an alloy of titanium). In an embodiment, the metallic spring extensions 304 are in contact with an inner radial surface 301A of the annular casing body 303. In an embodiment, the plurality of metallic spring extensions 304 can be segmented and spaced apart around a circumferential direction C of the annular casing body 303. In an embodiment, as shown in FIG. 3, the plurality of metallic spring extensions 304 form an angle relative to a circumference of the metallic liner 302. In an embodiment, as shown in FIG. 3, the plurality of metallic spring extensions 304 are oriented counterclockwise. However, the plurality of metallic spring extensions 304 also can be oriented clockwise. The plurality of metallic spring extensions 304 can be arranged to be axially aligned with the metallic liner 302 or can be oriented in a helical fashion.

In an embodiment, the metallic liner 302 is provided between the tip 198 of the mid-fan blades 192 and the inner radial surface 301A of the annular casing body 303 of the fan casing 301. The tip 198 of the mid-fan blades 192 is spaced apart from fan casing 301 (e.g., the metallic liner 220 of the fan casing 301) by a gap G along the radial direction R. As the annular casing body 303 of the fan casing 301 is made from a composite material that does not have a same thermal expansion as that of the metallic material of the mid-fan blades 192, the metallic liner 302 of the fan casing 301 is employed to substantially match the thermal expansion of the mid-fan blades 192 so as to maintain the gap G between tip 198 of the mid-fan blades 192 and the assembly 300 with a tighter clearance.

In an embodiment, the metallic liner 302 can be made from the same metallic material (e.g., titanium or an alloy of titanium) as the mid-fan blades 192. In an embodiment, the metallic liner 302 may have a substantially constant thickness T along the axial direction A. In another embodiment, the metallic liner 302 can also have a tapered thickness T that follows a profile of the tip 198 of the mid-fan blades 192.

The metallic liner 302 may include an abradable surface 306. The abradable surface 306 of the metallic liner 302 is configured to be abraded by the tip 198 of the mid-fan blade 192 when the tip 198 of the mid-fan blade 192 meets the abradable surface 306 of the metallic liner 302. In an embodiment, the abradable surface 306 can be a layer of abradable material (e.g., ceramic material) deposited on the metallic liner 302.

In operation, when a positive thermal gradient is present (i.e., the temperature increases), for example, during operation of the turbine engine 100, the metallic liner 302 and the plurality of metallic spring extensions 304 can expand and grow in length under the positive thermal gradient. As a result, the plurality of metallic spring extensions 304 apply a force against the inner radial surface 301A of the annular casing body 303 of the fan casing 301. As a result, the metallic liner 302 rotates circumferentially in a first direction (clockwise in the configuration shown in FIG. 3), and moves radially towards the annular casing body 303 of the fan casing 301 to control the gap G between the mid-fan blade 192 and the fan casing 301 (e.g., the metallic liner 302 of the fan casing 301). When a positive thermal gradient is present, the mid-fan blade 192 also expands. Therefore, the radial movement of the metallic liner 302 towards the annular casing body 303 provides the ability to counteract the expansion of the mid-fan blade 192 to maintain the gap relatively constant.

On the other hand, when a negative thermal gradient is present (i.e., the temperature decreases), the metallic liner 302 and the plurality of metallic spring extensions 304 can retract and shrink under the thermal gradient. As a result, the plurality of metallic spring extensions 304 release the force against the inner radial surface 301A of the annular casing body 303 of the fan casing 301. As a result, the metallic liner 302 rotates circumferentially in a second direction opposite the first direction (i.e., counterclockwise in the configuration shown in FIG. 3), and moves radially away from the annular casing body 303 of the fan casing 301 to control the gap G between the mid-fan blade 192 and the assembly 300, and more specifically, to control the gap G between the mid-fan blade 192 and the fan casing 301(e.g., the metallic liner 302 of the fan casing 301).

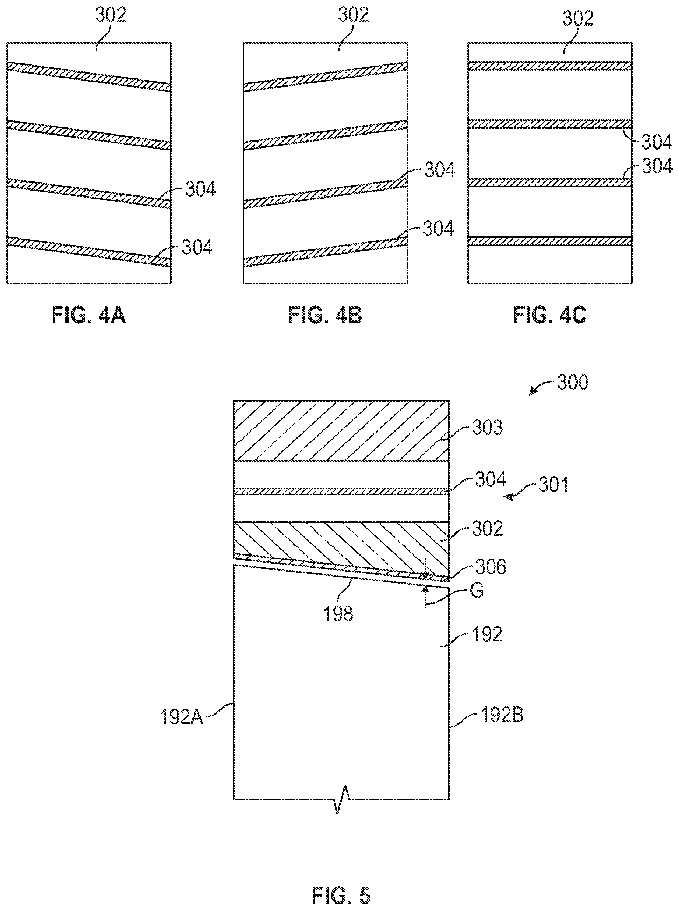

FIG. 4A is an axial view of the metallic liner 302 taken at line 4A-4A in FIG. 3, along the axial direction A, according to an embodiment of the present disclosure. FIG. 4A shows the metallic spring extensions 304 oriented at an angle relative to a surface of the metallic liner 302. The metallic spring extensions 304 are arranged in a helical-like configuration similar to the helical gear teeth where the teeth are set at an angle relative to the axis or the rotation.

FIG. 4B is an axial view of the metallic liner 302, along the axial direction A, according to another embodiment of the present disclosure. In this embodiment, the metallic spring extensions 304 are oriented in the opposite direction compared to the orientation shown in FIG. 4A.

FIG. 4C is an axial view of the metallic liner 302, along the axial direction A, according to yet another embodiment of the present disclosure. In this embodiment, the metallic spring extensions 304 are oriented in a normal direction relative to the surface metallic liner 302.

FIG. 5 is a cross-sectional view of the metallic liner 302 taken at line 5-5 in FIG. 3, according to an embodiment of the present disclosure. As shown in FIG. 5, the tip 198 of the mid-fan blade 192 may have an angled profile relative to a leading edge 192A of the mid-fan blade 192 and the trailing edge 192B of the mid-fan blade 192. The metallic liner 302 and optional abradable surface 306 of the metallic liner 302 may be provided such that the metallic liner 302 and the abradable surface 306 follow the angled profile of the tip 198 of the mid-fan blade 192. A gap G is provided between the tip 198 of the mid-fan blade 192 and the metallic liner or the abradable surface 306 of the metallic liner 302.

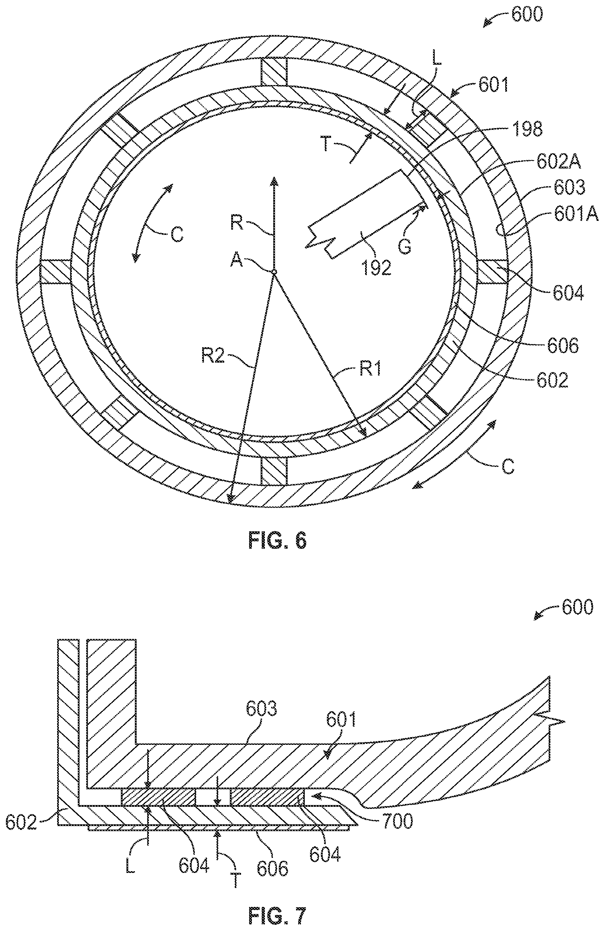

FIG. 6 is a cross-sectional view, taken along the radial direction R, of an assembly 600, including a fan casing 601 having a metallic liner 602, an annular casing body 603, and a plurality of spacers 604, according to an embodiment of the present disclosure. The assembly 600 can be, for example, used in the inlet duct 187 (shown in FIG. 1). In the depicted embodiment, the assembly 600, including the fan casing 601, is positioned radially outward of the mid-fan blades 192 (only one is shown in FIG. 6). The metallic liner 602 is spaced radially apart from the fan casing 601. The plurality of spacers 604 are provided between the annular casing body 603 of the fan casing 601 and the metallic liner 602 of the fan casing 601. In an embodiment, the annular casing body 603 of the fan casing 601 can be made from a composite material. In an embodiment, the plurality of spacers 604 are made of a material having a negative thermal expansion (i.e., a negative CTE material). A negative CTE material is a material that expands when temperature decreases (negative thermal gradient) and contracts when temperature increases (positive thermal gradient). An example of negative CTE materials is ALLVAR Alloys manufactured by ALLVAR company based in Texas. ALLVAR Alloys are titanium-based alloys.

In an embodiment, the plurality of spacers 604 are distributed around a circumference of the metallic liner 602 and the circumference of the annular casing body 603 of the fan casing 601. In an embodiment, the plurality of spacers 604 are in contact with an inner radial surface 601A of the annular casing body 603 of the fan casing 601 and in contact with an outer radial surface 602A of the metallic liner 602.

In an embodiment, the metallic liner 602 is provided between the tip 198 of the mid-fan blades 192 and the inner radial surface 601A of the annular casing body 603 of the fan casing 601. The tip 198 of the mid-fan blades 192 is spaced apart from the metallic liner 602 by a gap G along the radial direction R. As the annular casing body 603 of the fan casing 601 is made from a composite material, the annular casing body 603 does not have a same thermal expansion as that of the metallic material of the mid-fan blades 192. In addition, the metallic liner 602 is employed to substantially match the thermal expansion of the mid-fan blades 192 so as to maintain the gap G with a tighter clearance.

In an embodiment, a variation of a radial length L of the plurality of spacers 604 can be matched to an expansion or a contraction of a radius R1 of the metallic liner 602. For example, when the radius R1 of the metallic liner 602 increases (i.e., expands) radially outward under a positive thermal gradient (i.e., an increase in temperature), the radial length L of the spacers 604 decreases (i.e., contracts), counteracting the increase of the radius R1 of the metallic liner 602, so as to reduce stress between the metallic liner 602 and the annular casing body 603 (while a radius R2 of the annular casing body 603 remains substantially constant). Similarly, when the radius R1 of the metallic liner 602 decreases (i.e., retracts) radially inward under a negative thermal gradient (i.e., a decrease in temperature), the radial length L of the spacers 604 increases (i.e., expands), counteracting the decrease of the radius R1 of the metallic liner 602, so as to reduce stress between the metallic liner 602 and the annular casing body 603 (while the radius R2 of the annular casing body 603 remains substantially constant).

The term "substantially constant" is used herein to mean that a variation of the radius R2 of the annular casing body 603 of the fan casing 601 is negligible (e.g., less than 5%). A thickness T of the metallic liner 602 may or may not increase or decrease when the radius R1 of the metallic liner 602 increases or decreases.

In an embodiment, the metallic liner 602 can be made from the same metallic material (e.g., titanium or an alloy of titanium) as that of the mid-fan blades 192. In an embodiment, the metallic liner 602 may have a substantially constant thickness along the axial direction A. In another embodiment, the metallic liner 302 also can have a tapered thickness that follows a profile of the tip 198 of the mid-fan blades 192.

The metallic liner 302 may include an abradable surface 606. The abradable surface 606 of the metallic liner 602 is configured to be abraded by the tip 198 of the mid-fan blade 192 when the tip 198 of the mid-fan blade 192 meets the abradable surface 606 of the metallic liner 602. In an embodiment, the abradable surface 606 can be a layer of abradable material (e.g., a ceramic material) deposited on the metallic liner 602.

FIG. 7 is a cross-sectional view of the metallic liner 602, according to an embodiment of the present disclosure. As shown in FIG. 7, the plurality of spacers 604 may be provided between the metallic liner 602 and the fan casing 601, in a recess 700 of the fan casing 601.

The present disclosure provides a blade clearance control system that is tailored to a turbine engine bladed disk system where the containment casing has a lower CTE than that of the rotor system (e.g., the blades). The blades are generally made of a metal such as titanium, while the casing is made of a composite material. The use of a composite casing instead of a metal casing allows for a reduced weight system. The blades tend to thermally expand while the casing does not thermally expand, or minimally thermally expand, in a presence of a thermal gradient. Due to the thermal expansion of the blades, a clearance gap is provided between a tip of the blade and the casing to account for the thermal expansion. Initially, a gap is provided between the blades and the composite casing with an initial dimension D. However, due to the difference in the thermal expansion or contraction between the blades and the composite casing, the dimension D of the gap may increase. Efficiency of a turbine engine depends, at least in part, on the clearance or the gap between the composite casing and the blades. If the dimension of the gap is excessive, a correspondingly excessive fraction of engine airflow will pass through the gap, rather than interacting with the rotating blades, resulting in reduced engine efficiency. If the clearance is too small, interference can occur between the blades and the composite casing, resulting in damage to one or more of surfaces of the blades or the composite casing. As a result, a metallic liner (with or without spacers) is employed to substantially match the thermal expansion or contraction of the blades so as to maintain a smaller gap with a tighter clearance so as to not reduce engine efficiency or damage one or more surfaces of the blades or the composite casing. By providing smaller or tighter clearance gaps between the tip of the blade and the casing, a higher performance can be achieved. As a result, a better matched CTE system is provided so that the casing and the blade expand in similar amounts to maintain a tighter clearance gap.

Further aspects are provided by the subject matter of the following clauses.

An assembly to control a gap between a rotor blade and a casing in a turbine engine, the assembly including a casing including an annular casing body and a liner positioned adjacent an inner radial surface of the annular casing body, the casing being separated from a rotor blade by a gap in a radial direction. The annular casing body has a lower coefficient of thermal expansion (CTE) than that of the liner and that of the rotor blade, and the liner is provided to control the gap between the rotor blade and the casing.

The assembly of the preceding clause, wherein the casing includes a composite casing, the liner comprises a metallic liner, and the rotor blade comprises a metal rotor blade.

The assembly of any preceding clause, wherein the metallic liner is configured to match a thermal expansion or contraction of the metal rotor blade so as to maintain a smaller gap with a tighter clearance between the metal rotor blade and the composite casing so as to not reduce engine efficiency or damage one or more surfaces of the metal rotor blade or the composite casing. The metallic liner includes a frame, and a plurality of spring arms extending from the frame, the plurality of spring arms abutting an inner radial surface of the annular casing body, the plurality of spring arms being configured to expand and to apply a force against the inner radial surface of the annular casing body or to retract from the inner radial surface of the annular casing body to maintain the gap.

The assembly of any preceding clause, wherein the plurality of spring arms are integrally formed from a same metal material as that of the frame.

The assembly of any preceding clause, wherein the plurality of spring arms are segmented and are spaced apart around a circumferential direction of the composite casing.

The assembly of any preceding clause, wherein the plurality of spring arms extend a full circumference of three hundred sixty degrees of the composite casing.

The assembly of any preceding clause, wherein the metallic liner has a substantially constant thickness along an axial direction of the turbine engine.

The assembly of any preceding clause, wherein the frame has a U-shape and the plurality of spring arms are provided in an interior cavity of the U-shape.

The assembly of any preceding clause, wherein the frame of the metallic liner is secured in position on one end along an axial direction of the turbine engine by a notch in the inner radial surface and is secured in position on an opposite end along the axial direction by an axial retention member.

The assembly of any preceding clause, wherein the metallic liner has a tapered thickness that follows a profile of a tip of the rotor blade.

The assembly of any preceding clause, wherein the composite casing includes one or more bleed airflow openings to feed air to a cavity defined by the frame of the metallic liner and the inner radial surface of the annular casing body.

The assembly of any preceding clause, wherein the metallic liner includes an abradable surface, the abradable surface being configured to be abraded by a tip of the rotor blade, and the abradable surface being a layer of abradable material deposited on the frame of the metallic liner.

The assembly of any preceding clause, further including a plurality of spring extensions disposed between the annular casing body and the liner, the plurality of spring extensions being in contact with an inner radial surface of the casing, wherein the plurality of spring extensions are configured (i) to expand and to grow in length under a positive thermal gradient to apply a force against the inner radial surface of the casing, so as to rotate the liner circumferentially in a first direction and to move the liner radially towards the casing to control the gap between the rotor blade and the casing, and (ii) to retract and to shrink in length under a negative thermal gradient to release the force against the inner radial surface of the casing, so as to rotate the liner circumferentially in a second direction and to move the liner radially away from the casing to control the gap between the rotor blade and the casing, wherein the annular casing body includes a composite annular casing body, the liner includes a metallic liner, and the plurality of spring extensions include a plurality of metallic spring extensions, wherein the plurality of metallic spring extensions are integrally formed with the metallic liner.

The assembly of any preceding clause, wherein the plurality of metallic spring extensions are segmented and spaced apart around a circumferential direction of the composite annular casing body, and the plurality of metallic spring extensions form an angle relative to a circumference of the metallic liner.

The assembly of any preceding clause, wherein the metallic liner is made from a same metallic material as that of the rotor blade.

The assembly of any preceding clause, wherein the metallic liner includes an abradable surface, the abradable surface being configured to be abraded by a tip of the rotor blade.

The assembly of any preceding clause, wherein the metallic liner has a tapered thickness that follows a profile of a tip of the rotor blade.

The assembly of any preceding clause, further comprising a plurality of spacers disposed between the annular casing body and the liner, the plurality of spacers being in contact with both an inner radial surface of the annular casing body and the liner, wherein the plurality of spacers are made of a material having a negative coefficient of thermal expansion (CTE), wherein, when a radius of the liner increases under a positive thermal gradient, a radial length of the plurality of spacers decreases, counteracting the increase of the radius of the liner, and, when the radius of the liner decreases under a negative thermal gradient, the radial length of the plurality of spacers increases, counteracting the decrease of the radius of the liner so as to reduce stress between the liner and the annular casing body.

The assembly of any preceding clause, wherein the plurality of spacers are distributed around a circumference of the liner and a circumference of the casing.

The assembly of any preceding clause, wherein the liner includes an abradable surface, the abradable surface of the liner configured to be abraded by a tip of the rotor blade when the tip of the rotor blade meets the abradable surface of the liner.

A turbine engine including an assembly to control a gap between a rotor blade and a casing in the turbine engine. The assembly includes a casing including an annular casing body and a liner positioned adjacent an inner radial surface of the annular casing body, the casing being separated from a rotor blade by a gap in a radial direction. The annular casing body has a lower coefficient of thermal expansion (CTE) than that of the liner and that of the rotor blade, and the liner is provided to control the gap between the rotor blade and the casing.

The turbine engine of the preceding clause, wherein the casing includes a composite casing, the liner comprises a metallic liner, and the rotor blade comprises a metal rotor blade.

The turbine engine of any preceding clause, wherein the metallic liner is configured to match a thermal expansion or contraction of the metal rotor blade so as to maintain a smaller gap with a tighter clearance between the metal rotor blade and the composite casing so as to not reduce engine efficiency or damage one or more surfaces of the metal rotor blade or the composite casing. The metallic liner includes a frame, and a plurality of spring arms extending from the frame, the plurality of spring arms abutting an inner radial surface of the annular casing body, the plurality of spring arms being configured to expand and to apply a force against the inner radial surface of the annular casing body or to retract from the inner radial surface of the annular casing body to maintain the gap.

The turbine engine of any preceding clause, wherein the plurality of spring arms are integrally formed from a same metal material as that of the frame.

The turbine engine of any preceding clause, wherein the plurality of spring arms are segmented and are spaced apart around a circumferential direction of the composite casing.

The turbine engine of any preceding clause, wherein the plurality of spring arms extend a full circumference of three hundred sixty degrees of the composite casing.

The turbine engine of any preceding clause, wherein the metallic liner has a substantially constant thickness along an axial direction of the turbine engine.

The turbine engine of any preceding clause, wherein the frame has a U-shape and the plurality of spring arms are provided in an interior cavity of the U-shape.

The turbine engine of any preceding clause, wherein the frame of the metallic liner is secured in position on one end along an axial direction of the turbine engine by a notch in the inner radial surface and is secured in position on an opposite end along the axial direction by an axial retention member.

The turbine engine of any preceding clause, wherein the metallic liner has a tapered thickness that follows a profile of a tip of the rotor blade.

The turbine engine of any preceding clause, wherein the composite casing includes one or more bleed airflow openings to feed air to a cavity defined by the frame of the metallic liner and the inner radial surface of the annular casing body.

The turbine engine of any preceding clause, wherein the metallic liner includes an abradable surface, the abradable surface being configured to be abraded by a tip of the rotor blade, and the abradable surface being a layer of abradable material deposited on the frame of the metallic liner.

The turbine engine of any preceding clause, further including a plurality of spring extensions disposed between the annular casing body and the liner, the plurality of spring extensions being in contact with an inner radial surface of the casing, wherein the plurality of spring extensions are configured (i) to expand and to grow in length under a positive thermal gradient to apply a force against the inner radial surface of the casing, so as to rotate the liner circumferentially in a first direction and to move the liner radially towards the casing to control the gap between the rotor blade and the casing, and (ii) to retract and to shrink in length under a negative thermal gradient to release the force against the inner radial surface of the casing, so as to rotate the liner circumferentially in a second direction and to move the liner radially away from the casing to control the gap between the rotor blade and the casing, wherein the annular casing body includes a composite annular casing body, the liner includes a metallic liner, and the plurality of spring extensions include a plurality of metallic spring extensions, wherein the plurality of metallic spring extensions are integrally formed with the metallic liner.

The turbine engine of any preceding clause, wherein the plurality of metallic spring extensions are segmented and spaced apart around a circumferential direction of the composite annular casing body, and the plurality of metallic spring extensions form an angle relative to a circumference of the metallic liner.

The turbine engine of any preceding clause, wherein the metallic liner is made from a same metallic material as that of the rotor blade.

The turbine engine of any preceding clause, wherein the metallic liner includes an abradable surface, the abradable surface being configured to be abraded by a tip of the rotor blade.

The turbine engine of any preceding clause, wherein the metallic liner has a tapered thickness that follows a profile of a tip of the rotor blade.

The turbine engine of any preceding clause, further comprising a plurality of spacers disposed between the annular casing body and the liner, the plurality of spacers being in contact with both an inner radial surface of the annular casing body and the liner, wherein the plurality of spacers are made of a material having a negative coefficient of thermal expansion (CTE), wherein, when a radius of the liner increases under a positive thermal gradient, a radial length of the plurality of spacers decreases, counteracting the increase of the radius of the liner, and, when the radius of the liner decreases under a negative thermal gradient, the radial length of the plurality of spacers increases, counteracting the decrease of the radius of the liner so as to reduce stress between the liner and the annular casing body.

The turbine engine of any preceding clause, wherein the plurality of spacers are distributed around a circumference of the liner and a circumference of the casing.

The turbine engine of any preceding clause, wherein the liner includes an abradable surface, the abradable surface of the liner configured to be abraded by a tip of the rotor blade when the tip of the rotor blade meets the abradable surface of the liner.

The turbine engine of any preceding clause, wherein the plurality of metallic spring extensions are oriented counterclockwise or clockwise.

The turbine engine of any preceding clause, wherein the metallic liner has a substantially constant thickness along an axial direction.

The turbine engine of any preceding clause, wherein the metallic liner has a tapered thickness that follows a profile of a tip of the rotor blade.

The turbine engine of any preceding clause, wherein the first direction is a clockwise direction and the second direction is counterclockwise.

The turbine engine of any preceding clause, wherein the material having the negative coefficient of thermal expansion comprises a titanium-based alloy.

The turbine engine of any preceding clause, wherein the plurality of spacers are distributed around a circumference of the liner and a circumference of the casing.

The turbine engine of any preceding clause, wherein the plurality of spacers are in contact with an inner radial surface of the casing and in contact with an outer radial surface of the liner.

The turbine engine of any preceding clause, wherein the liner has an abradable surface, the abradable surface of the liner configured to be abraded by a tip of the rotor blade when the tip of the rotor blade meets the abradable surface of the liner.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. An assembly (300, 600) to control a gap between a rotor blade (192) and a casing (200, 301, 601) in a turbine engine (100), the assembly (300, 600) comprising:
a casing (200, 301, 601) comprising an annular casing body (201, 303, 603) and a liner (220, 302, 602) positioned adjacent an inner radial surface (212, 301A, 601A) of the annular casing body (201, 303, 603), the casing (200, 301, 601) being separated from a rotor blade (192) by a gap (G) in a radial direction,
wherein the annular casing body (201, 303, 603) has a lower coefficient of thermal expansion (CTE) than that of the liner (220, 302, 602) and that of the rotor blade (192), and the liner (220, 302, 602) is provided to control the gap between the rotor blade (192) and the casing (200, 301, 601).

2. The assembly (300, 600) of claim 1, wherein the annular casing body (201, 303, 603) comprises a composite annular casing body (201, 303, 603), the liner (220, 302, 602) comprises a metallic liner (220, 302, 602), and the rotor blade (192) comprises a metal rotor blade (192).

3. The assembly (300, 600) of claim 2, wherein the metallic liner (220, 302, 602) is configured to match a thermal expansion or contraction of the rotor blade (192) so as to not reduce engine efficiency or damage one or more surfaces of the metal rotor blade or the composite annular casing body, the metallic liner (220, 302, 602) comprising:
a frame (220A); and
a plurality of spring arms (220B) extending from the frame (220A), the plurality of spring arms (220B) abutting the inner radial surface (212) of the composite annular casing body (201, 303, 603), the plurality of spring arms (220B) being configured to expand and to apply a force against the inner radial surface (212) of the annular casing body (201, 303, 603) or to retract from the inner radial surface (212) of the composite annular casing body (201, 303, 603) to maintain the gap.

4. The assembly (300, 600) of claim 3, wherein the plurality of spring arms (220B) are integrally formed from a same metal material as that of the frame (220A), or the plurality of spring arms (220B) are segmented and are spaced apart around a circumferential direction of the casing, or the plurality of spring arms (220B) extend a full circumference of three hundred sixty degrees of the casing, or the metallic liner (220, 302, 602) has a substantially constant thickness along an axial direction of the turbine engine (100), or the frame (220A) has a U-shape and the plurality of spring arms (220B) are provided in an interior cavity (222) of the U-shape.

5. The assembly (300, 600) of any one of claims 3-4, wherein the frame (220A) of the metallic liner (220, 302, 602) is secured in position on one end along an axial direction of the turbine engine (100) by a notch in the inner radial surface (212, 301A, 601A) and is secured in position on an opposite end along the axial direction by an axial retention member (214), and optionally, the metallic liner (220, 302, 320, 602) has a tapered thickness that follows a profile of a tip (198) of the rotor blade (192).

6. The assembly (300, 600) of any one of claims 3-5, wherein the composite annular casing body includes one or more bleed airflow openings (200A) to feed air to a cavity (222) defined by the frame (220A) of the metallic liner (220, 302, 602) and the inner radial surface (212, 301A, 601A) of the composite annular casing body.

7. The assembly (300, 600) of any one of claims 3-6, wherein the metallic liner (220, 302, 602) includes an abradable surface (220C, 306, 606), the abradable surface (220C, 306, 606) being configured to be abraded by a tip (198) of the rotor blade (192), and the abradable surface (220C, 306, 606) being a layer of abradable material deposited on a frame (220A) of the metallic liner (220, 302, 320, 602).

8. The assembly (300, 600) of claim 1, further comprising a plurality of spring extensions (304) disposed between the annular casing body (303) and the liner, the plurality of spring extensions (304) being in contact with the inner radial surface (301A) of the annular casing body (303),
wherein the plurality of spring extensions (304) are configured (i) to expand and to grow in length under a positive thermal gradient to apply a force against the inner radial surface (301A) of the casing, so as to rotate the liner circumferentially in a first direction and to move the liner radially back towards the casing to control the gap between the rotor blade (192) and the liner, and (ii) to retract and to shrink in length under a negative thermal gradient to release the force against the inner radial surface (301A) of the casing, so as to rotate the liner circumferentially in a second direction and to move the liner radially forward towards the casing to control the gap between the rotor blade (192) and the liner,
wherein the annular casing body (303) comprises a composite casing, the liner comprises a metallic liner (302), and the plurality of spring extensions (304) comprise a plurality of metallic spring extensions (304),
wherein the plurality of metallic spring extensions (304) are coupled to the metallic liner (302) and the plurality of metallic spring extensions (304) are integrally formed with the metallic liner (302).

9. The assembly (300, 600) of claim 8, wherein the plurality of metallic spring extensions (304) are segmented and spaced apart around a circumferential direction of the composite casing, and the plurality of metallic spring extensions (304) form an angle relative to a circumference of the metallic liner (302).

10. The assembly (300, 600) of any one of claims 8-10, wherein the metallic liner (302) is made from a same metallic material as that of the rotor blade (192).

11. The assembly (300, 600) of any one of claims 8-10, wherein the metallic liner (302) includes an abradable surface (306), the abradable surface (306) being configured to be abraded by a tip (198) of the rotor blade (192).

12. The assembly (300, 600) of any one of claims 8-11, wherein the metallic liner (302) has a tapered thickness that follows a profile of a tip (198) of the rotor blade (192).

13. The assembly (300, 600) of claim 1, further comprising a plurality of spacers (604) disposed between the casing and the liner, the plurality of spacers (604) being in contact with both the inner radial surface (601A) of the casing and the liner, wherein the plurality of spacers (604) are made of a material having a negative coefficient of thermal expansion,
wherein, when a radius of the liner increases under a positive thermal gradient, a radial length of the plurality of spacers (604) decreases, counteracting the increase of the radius of the liner, and, when the radius of the liner decreases under a negative thermal gradient, the radial length of the plurality of spacers (604) increases, counteracting the decrease of the radius of the liner so as to reduce stress between the liner (602) and the annular casing body (603).

14. The assembly (300, 600) of claim 13, wherein the plurality of spacers (604) are distributed around a circumference of the liner and a circumference of the annular casing body (603).

15. The assembly (300, 600) of any one of claims 13-14, wherein the liner comprises an abradable surface (220C, 306, 606), the abradable surface (220C, 306, 606) of the liner configured to be abraded by a tip (198) of the rotor blade (192) when the tip (198) of the rotor blade (192) meets the abradable surface (220C, 306, 606) of the liner.
